# EUROPÄISCHE PATENTSCHRIFT

(11) **EP 2 650 570 B1**
(45) Veröffentlichungstag und Bekanntmachung des Hinweises auf die Patenterteilung: **15.05.2019**
(21) Anmeldenummer: 13175539.9
(22) Anmeldetag: 30.09.2009
(51) Int. Cl.: F16H 61/04, F16H 61/70, F16H 63/34, F16H 63/38

(54) **Schaltanordnung zum Schalten einer Bereichsgruppe eines Mehrgruppengetriebes**
Method for shifting a group of a multi-group transmission and shift assembly
Procédé de commutation d'un groupe d'une transmission à groupes multiples et appareil de commutation

(30) Priorität: 20.10.2008 DE 102008042958
(43) Veröffentlichungstag der Anmeldung: 16.10.2013
(62) Teilanmeldung aus: 09171753.8
(73) Patentinhaber: ZF Friedrichshafen AG, 88046 Friedrichshafen (DE)
(72) Erfinder: Miller, Martin, 88090 Immenstaad (DE); Bader, Josef, 88045 Friedrichshafen (DE)

(56) Entgegenhaltungen:
- DE-A1-102005 022 995
- FR-A1- 2 551 168
- US-A1- 2008 236 322

## Beschreibung

Die vorliegende Erfindung betrifft eine Schaltanordnung zum Schalten einer Bereichsgruppe eines Mehrgruppengetriebes gemäß dem Oberbegriff des Patentanspruchs 1.

Insbesondere im Antriebsstrang von Nutzfahrzeugen werden häufig automatisierte Mehrgruppengetriebe mit einer vorgeschalteten Splitgruppe, einem Hauptgruppe und einer nachgeschalteten Bereichsgruppe eingesetzt. Durch die Bereichsgruppe mit einem langsamen und einem schnellen Bereich kann die Gangzahl aus Split- und Hauptgruppe verdoppelt werden. Zum Wechsel zwischen dem langsamen und dem schnellen Bereich des Mehrgruppengetriebes kann die Bereichsgruppe während einer Zugkraftunterbrechung umgeschaltet werden, indem eine Getriebeeingangswelle der Bereichsgruppe während des Schaltvorgangs durch eine Kupplung von einer Antriebsmaschine getrennt wird. Der gewünschte Bereich kann dann mit Hilfe einer Schaltanordnung eingeschaltet werden, indem die Schaltverzahnung einer Schiebemuffe in die Kuppelverzahnung eines Kupplungskörpers geschoben wird, wobei der Kupplungskörper drehfest an einem mit der Schiebemuffe zu verbindenden Getriebeelement befestigt ist, z. B. an einem Planetenträger oder am Getriebegehäuse.

Wird in der Bereichsgruppe von dem einen Bereich zu dem anderen Bereich gewechselt, müssen die zu verbindenden Getriebeelemente während des Schaltvorganges auf eine annähernd gleiche Drehzahl gebracht werden, bevor die Schaltverzahnung der Schiebemuffe in die Kuppelverzahnung des zu schaltenden Kupplungskörpers eingreifen kann. Eine solche Drehzahlangleichung kann entweder mit Hilfe einer mechanischen Synchronisierung oder, z. B. bei einer Klauenschaltung, durch eine präzise geregelte Führung der Drehzahlen der miteinander zu kuppelnden Getriebeelemente auf einen zumindest annähernd gleichen Wert erreicht werden. Eine Schaltanordnung mit mechanischer Synchronisierung erlaubt schnellere Schaltungen, weil ohne Zwischenstopp von einer Endstellung in die andere Endstellung geschaltet wird. Der Aufbau einer derartigen Schaltanordnung ist jedoch verhältnismäßig aufwändig. Eine als Klauenschaltung ausgeführte Schaltanordnung mit präziser Drehzahlangleichung über die Ansteuerung des Antriebsmotors bzw. der Getriebebremse erfordert einen höheren steuerungstechnischen Aufwand, sowie einen größeren Zeitbedarf, weil die Schaltanordnung bei jeder Schaltung in die Neutralstellung und wieder aus dieser heraus geschaltet werden muss.

Eine mechanische Synchronisierung besteht im Wesentlichen aus ersten Reibflächen, z. B. einem Reibkonus am Kupplungskörper und aus diesen gegenüberliegenden zweiten Reibflächen, z. B. einem Gegenkonus an einem Synchronring, der zudem eine Sperrverzahnung aufweist. Der Synchronring läuft mit der Schiebemuffe um, kann sich jedoch zwischen zwei Anschlägen gegenüber dieser um einen begrenzten Drehwinkel drehen, damit eine Sperrverzahnung am Synchronring in Sperrstellung gebracht wird. Bewegt man die Schiebemuffe in Richtung des zu schaltenden Kupplungskörpers, wird der Synchronring mit seinem Gegenkonus über nachgebende Rastmittel gegen den Reibkonus des Kupplungskörpers gedrückt. Dabei verdreht sich der Synchronring relativ zur Schiebemuffe, so dass stirnseitige Schrägflächen der Schaltverzahnung auf entsprechende Sperrflächen der Sperrverzahnung stoßen. Dadurch wird eine Axialkraft auf den Synchronring und die Reibflächen ausgeübt. Die Schaltkraft erzeugt gleichzeitig über die Schrägflächen eine Rückstellkraft auf den Synchronring. Diese überwiegt bei Gleichlauf der Teile die an den Reibflächen wirkende Umfangskraft und bringt den Synchronring in eine freie Durchschaltstellung, bei der die Schiebemuffe durchgeschaltet werden kann.

Eine derartige mechanische Synchronisierung zur Schaltung einer Bereichsgruppe eines Mehrgruppengetriebes ist beispielsweise in der DE 19733519 A1 beschrieben. Gemäß einer dort beschriebenen Ausführung wird der Synchronring zur Aufhebung der Sperrstellung beim Schaltvorgang immer in dieselbe Richtung verdreht. Die Sperrverzahnung ist dazu auf der Stirnseite nur einseitig abgeschrägt, wodurch wiederum die Verzahnung verstärkt ausgeführt werden kann ohne zusätzlichen Bauraum zu benötigen. Eine solche Synchronisierung ist jedoch nur in einer Drehrichtung, nämlich bei Vorwärtsfahrt wirksam, weil der Synchronring mit der einseitig abgeschrägten Sperrverzahnung bei Rückwärtsfahrtschaltungen durch das umgekehrte Drehmoment sofort aus der Sperrstellung in die freie Durchschaltstellung verdreht wird und damit nicht mehr sperrend wirkt, bis der Gleichlauf zwischen den zu kuppelnden Getriebeelementen erreicht ist.

Zum Schalten der Bereichsgruppe eines Mehrgruppengetriebes ist die oben beschriebene Schaltanordnung bislang gut geeignet, weil es üblich ist, die Bereichsgruppe nur bei Vorwärtsfahrt zu schalten. Rückwärtsgänge werden bisher in den eingangs beschriebenen Mehrgruppengetrieben nur durch Schaltungen im Hauptgetriebe, also ohne eine Bereichsschaltung geschaltet. Es gibt nun jedoch Bestrebungen auch beim Rückwärtsfahren Bereichsschaltungen in derartigen Mehrgruppengetrieben vorzunehmen. Da die oben beschriebene mechanische Synchronisierung für die Bereichsgruppe eines Mehrgruppengetriebes jedoch bei Rückwärtsfahrt nicht wirksam ist, treten mit dem herkömmlichen Schaltablauf einer Bereichsschaltung bei Rückwärtsfahrt unerwünschte Ratschgeräusche und ein erhöhter Verschleiß auf.

Um derart synchronisierte Schaltanordnungen auch bei Rückwärtsfahrt störungsfrei zu schalten, kann eine Neutralstellung zwischen den beiden Endstellungen der Schaltanordnung eingerichtet werden. Damit können Bereichsschaltungen auch bei Rückwärtsfahrt störungsfrei durchgeführt werden, indem die Getriebeeingangswelle präzise auf die erforderliche Zieldrehzahl des Zielganges beschleunigt bzw. abgebremst wird, während die Schaltanordnung in der Neutralstellung steht.

Eine Neutralstellung kann beispielsweise durch die Verwendung eines Dreistellungszylinders zum Betätigen der Schaltschiene realisiert werden, wobei die mittlere Stellung des Dreistellungszylinders der Neutralstellung der Schaltanordnung entspricht. Eine andere Möglichkeit, um eine Neutralstellung zu realisieren, ist die Verwendung einer Rastiereinrichtung für die Neutralstellung, die beispielsweise an einer Schaltschiene der Schaltanordnung angeordnet ist. Eine derartige Rastierung ist aus der DE 102005022995 A1 bekannt. Bei beiden Möglichkeiten kann die Neutralstellung jedoch nur mit einer begrenzten Genauigkeit angefahren bzw. gehalten werden. Dadurch ergeben sich Toleranzbereiche in beiden Bewegungsrichtungen, die bei der Auslegung und Ansteuerung der Schalteinrichtung berücksichtigt werden müssen, um sicher zu stellen, dass die tatsächliche Neutralstellung der Schaltanordnung innerhalb eines vorgegebenen Bereiches liegt, in dem die Schaltvorgänge störungsfrei ablaufen. Die zusätzlichen, durch die Neutralstellung bedingten Toleranzbereiche und damit längeren Wege der Schalt- bzw. Getriebeelemente laufen jedoch dem Bestreben nach einem möglichst kleinen Bauraum und nach kurzen Schaltwegen entgegen.

Eine gattungsgemäße Schaltanordnung zum Schalten einer Bereichsgruppe eines Mehrgruppengetriebes mit einem langsamen und einem schnellen Bereich ist aus der US 2008/0236322 A1 bekannt. Diese Schaltanordnung weist eine synchronisierte Zweistellungs-Schaltkupplungsanordnung auf, die in einer Neutralstellung rastierbar ist.

Eine weitere Schaltanordnung zum Schalten einer Bereichsgruppe eines Mehrgruppengetriebes mit einem langsamen und einem schnellen Bereich ist aus der FR 2551168 A1 bekannt. Darin ist eine pneumatisch betätigbare Schaltanordnung mit einer federkraftbetätigten Neutralstellungsrastierung beschrieben.

Es ist die Aufgabe der vorliegenden Erfindung eine Schaltanordnung zum störungsfreien Schalten einer Bereichsgruppe eines Mehrgruppengetriebes bei Vor- und Rückwärtsfahrt zu schaffen, wobei die Schaltanordnung der Bereichsgruppe eine mechanische Synchronisierung aufweist und möglichst wenig Bauraum benötigt. Des Weiteren soll eine entsprechende Schaltanordnung und ein entsprechendes Mehrgruppengetriebe geschaffen werden, die beide kurze Schaltwege aufweisen und möglichst wenig Bauraum benötigen.

Gelöst wird diese Aufgabe durch eine Schaltanordnung gemäß Patentanspruch 1 und ein Mehrgruppengetriebe gemäß Patentanspruch 6. Vorteilhafte Weiterbildungen sind in den jeweiligen abhängigen Ansprüchen beschrieben.

Es wird ein Verfahren zum Schalten einer Bereichsgruppe eines Mehrgruppengetriebes mit einem langsamen und einem schnellen Bereich bei Rückwärtsfahrt beschrieben, wobei eine Schaltanordnung der Bereichsgruppe eine mechanische Synchronisierung aufweist. Dabei wird bei Rückwärtsfahrt und Schaltungen in den langsamen Bereich ein Gleichlauf der zu verbindenden Getriebeelemente durch eine geregelte Drehzahlführung der Getriebeeingangswelle mit Hilfe des Antriebsmotors herbeigeführt, wogegen bei Schaltungen in den schnellen Bereich die Getriebeeingangswelle zunächst abgebremst wird, bis unterhalb einer Zieldrehzahl n_{S} und danach der Gleichlauf der zu verbindenden Getriebeelemente durch die mechanische Synchronisierung herbeigeführt wird.

Der Erfindung liegt die Erkenntnis zugrunde, dass die üblicherweise in der Bereichsgruppe von Mehrgruppengetrieben benutzten mechanischen Synchronisierungen nur in einer Fahrtrichtung, nämlich bei Vorwärtsfahrt, wirksam sind. Deshalb ergeben sich mit dem herkömmlichen Schaltablauf, der bisher für Bereichsschaltungen bei Vorwärtsfahrt angewendet wurde, bei Bereichsschaltungen während der Rückwärtsfahrt Probleme. Es kommt zu unerwünschten Ratschgeräuschen und zu erhöhtem Verschleiß. Mit dem beschriebenen Verfahren werden diese Nachteile beseitigt, weil die notwendige Drehzahlangleichung der zu verbindenden Getriebeteile bei Rückwärtsfahrt auf eine andere Art durchgeführt wird. Das beschriebene Anpassen der Drehzahl der Getriebeeingangswelle wird beispielsweise mit Hilfe von elektronischen Steuereinrichtungen, wie einer Fahrzeug-, Motor- und/oder Getriebesteuerung durch ein Beschleunigen oder Abbremsen der Getriebeeingangswelle gesteuert bzw. geregelt. Auf diese Weise können die bestehenden Vorteile der herkömmlichen mechanischen Synchronisierung bei Vorwärtsfahrt genutzt werden und ein störungsfreier Ablauf der Bereichsschaltungen bei Rückwärtsfahrt ist trotzdem möglich.

Vorzugsweise erfolgt die geregelte Drehzahlführung der Getriebeeingangswelle beim Beschleunigen mit Hilfe des Antriebsmotors und beim Abbremsen der Getriebeeingangswelle mit Hilfe einer Getriebebremse, während sich die Schaltanordnung in einer Neutralstellung befindet, wobei der Antriebsmotor und die Getriebebremse von der Fahrzeug-, Motor- und/oder Getriebesteuerung angesteuert werden.

Eine bevorzugte Ausführung des Verfahrens sieht vor, dass die Neutralstellung innerhalb eines Neutralstellungsbereiches liegt, der sich in axialer Richtung von einem Ausschaltpunkt zwischen einer Schaltverzahnung einer Schiebemuffe und einer Kupplungsverzahnung des langsamen Bereiches bis zu einem Synchronpunkt des schnellen Bereiches erstreckt, wobei der Synchronpunkt bei der Schaltbewegung der Schiebemuffe in Richtung schneller Bereich dann erreicht ist, wenn die Schaltverzahnung der Schiebemuffe auf eine Sperrverzahnung eines Synchronringes trifft, der dem schnellen Bereich zugeordnet ist. Der Ausschaltpunkt zwischen der Schaltverzahnung der Schiebemuffe und der Kupplungsverzahnung an dem Kupplungskörper des langsamen Bereiches ist der Punkt, an dem bei der Bewegung der Schiebemuffe in Richtung schneller Bereich zwischen der Schaltverzahnung und der Kupplungsverzahnung der Berührungskontakt abbricht und ein Abstand in axialer Richtung entsteht.

Da die mechanische Synchronisierung bei Rückwärtsfahrt nur beim Schalten in den schnellen Bereich benutzt wird, wird der Schaltweg, der zur Funktion der mechanischen Synchronisierung notwendig ist, beim Schalten in den langsamen Bereich bei Rückwärtsfahrt nicht benötigt. Dadurch ist es möglich, diesen Schaltweg bzw. diesen Platz anderweitig zu nutzen, beispielsweise als Neutralstellungsbereich. Innerhalb dieses Neutralstellungsbereiches lassen sich auch die Toleranzbereiche abdecken, ohne dass die gesamte Schaltanordnung mehr Bauraum benötigt.

Zur Durchführung des beschriebenen Verfahrens wird eine erfindungsgemäße Schaltanordnung zum Schalten einer Bereichsgruppe eines Mehrgruppengetriebes mit einem langsamen und einem schnellen Bereich und mit einer mechanischen Synchronisierung vorgeschlagen, die eine axial verschiebbare Schiebemuffe mit beidseitig angeordneten Synchronringen mit Sperrverzahnung aufweist. Die Schaltanordnung weist des Weiteren eine Neutralstellungsrastierung auf, mit der die Schaltanordnung in einem Neutralstellungsbereich rastierbar ist, der sich in axialer Richtung erstreckt. Innerhalb dieses Neutralstellungsbereiches ist die Schaltanordnung in einer Neutralstellung zwischen den zwei Endstellungen, die dem langsamen und dem schnellen Bereich entsprechen, rastierbar. Das heißt, dass die Neutralstellung nicht als ein Punkt definiert ist, sondern als ein Bereich in der axialen Bewegungsrichtung der Schiebemuffe. Dies ist innerhalb des vorhandenen Bauraumes einer herkömmlichen Schaltanordnung mit mechanischer Synchronisierung möglich, weil der Weg der Schiebemuffenverzahnung über den Synchronring bei Bereichsschaltungen bei Rückwärtsfahrt in den langsamen Bereich nicht für die Synchronisierung benötigt wird. Bei diesen Bereichsschaltungen wird die Drehzahl der zu verbindenden Getriebeteile allein durch eine präzise Führung der Motordrehzahl angeglichen.

Erfindungsgemäß erstreckt sich der Neutralstellungsbereich von einem Ausschaltpunkt des langsamen Bereiches bis zu einem Synchronpunkt des schnellen Bereiches. Dabei liegt der Ausschaltpunkt dort, wo die einander zugewandten Enden einer Schaltverzahnung der Schiebemuffe und einer Kupplungsverzahnung eines dem langsamen Bereich zugeordneten Kupplungskörpers bei radialer Blickrichtung auf einer Linie liegen, und der Synchronpunkt liegt dort, wo die Schaltverzahnung der Schiebemuffe bei der Schaltbewegung der Schiebemuffe in Richtung des schnellen Bereiches auf die Sperrverzahnung des dem schnellen Bereich zugeordneten Synchronringes trifft.

Die Schaltanordnung ist gemäß einer bevorzugten Ausführung automatisiert betätigbar. Dazu sind Betätigungsaktuatoren der Schaltanordnung von einer elektronischen Steuereinrichtung in Abhängigkeit von erfassten und der Steuereinrichtung zugeführten Drehzahlwerten an antriebsseitigen und abtriebsseitigen Getriebeelementen ansteuerbar.

Die Neutralstellungsrastierung ist vorzugsweise gesteuert ein- und ausschaltbar. Dazu ist die Neutralstellungsrastierung von einer elektronischen Steuereinrichtung in Abhängigkeit von erfassten und der Steuereinrichtung zugeführten Drehzahlwerten an den antriebsseitigen und den abtriebsseitigen Getriebeelementen ein- und ausschaltbar. Auf diese Weise ist es möglich, die Neutralstellungsrastierung nur in den Phasen einzuschalten, in denen sie benötigt wird, nämlich bei Bereichsschaltungen bei Rückwärtsfahrt. In allen anderen Betriebsphasen kann die Neutralstellungsrastierung unwirksam bzw. ausgeschaltet sein. Bei herkömmlichen Rastierungen wirkt ein vorgespanntes Rastierelement dauernd und bei allen Schaltungen bremsend gegenüber der Betätigungskraft bei Bereichschaltungen. Demgegenüber können die Schaltkräfte durch das beschriebene Verfahren insgesamt gering gehalten werden, weil bei Schaltungen bei Vorwärtsfahrt keine Rastierkräfte überwunden werden müssen. So können die Betätigungskraft, die Betätigungsenergie und der Verschleiß der Schaltelemente gering gehalten werden.

Eine bevorzugte Ausführung der Erfindung weist eine Neutralstellungsrastierung mit einem Rastelement auf, welches zum Zwecke der Rastierung formschlüssig in eine Vertiefung einer zur Schaltanordnung gehörenden Schaltschiene eingreift. Zur Verwirklichung des Rastierstellungsbereiches hat die Vertiefung in der Schaltschiene eine gewisse Ausdehnung in Betätigungsrichtung, so dass das eingerückte Rastelement im rastierten Zustand die Schaltanordnung nicht auf eine feste Neutralstellung festlegt, sondern einen bestimmten Bereich als Neutralstellungsbereich offen lässt.

Die Erfindung umfasst auch ein Mehrgruppengetriebe mit einer Splitgruppe, einer Hauptgruppe und einer Bereichsgruppe, bei dem die Bereichsgruppe mit einer synchronisierten Schaltanordnung ausgestattet ist und eine Neutralstellungsrastierung aufweist.

Die Erfindung eignet sich insbesondere für automatisierte Stufengetriebe, bei denen die Schaltung durch pneumatische oder hydraulische Stellglieder betätigt wird.

Mit Hilfe der nachfolgenden Figuren wird die Erfindung und weitere Vorteile näher erläutert. Dabei zeigen
- Figur 1: den Drehzahlverlauf der Getriebeeingangswelle bei Bereichsschaltungen nach dem beschriebenen Verfahren,
- Figur 2: eine teilweise Abwicklung eines Zylinderschnitts im Bereich der Schaltverzahnung der Schiebemuffe und der Kupplungsverzahnungen der Kupplungskörper einer erfindungsgemäßen Schaltanordnung in mittiger Neutralstellung,
- Figur 3: die teilweise Abwicklung aus Fig. 2, wobei sich die Schiebemuffe am Synchronpunkt in Richtung schneller Bereich befindet,
- Figur 4: die teilweise Abwicklung aus Fig. 2, wobei sich die Schiebemuffe am Durchschaltpunkt in Richtung schneller Bereich befindet,
- Figur 5: die teilweise Abwicklung aus Fig. 2, wobei sich die Schiebemuffe am Ausschaltpunkt zwischen der Schaltverzahnung der Schiebemuffe und der Kupplungverzahnung des langsamen Bereiches befindet und
- Figur 6: einen Ausschnitt aus einer erfindungsgemäßen Schaltanordnung in Neutralstellung bei eingeschalteter Neutralstellungsrastierung.

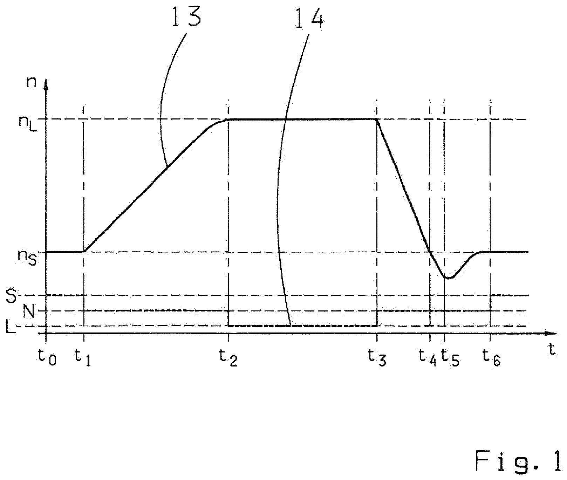

Das Diagramm in Fig. 1 zeigt anhand der durchgezogenen Linie den Drehzahlverlauf 13 der Getriebeeingangswelle während eines Schaltvorganges bei Rückwärtsfahrt vom schnellen in den langsamen Bereich der Bereichsgruppe eines Mehrgruppengetriebes und während eines anschließenden Schaltvorganges vom langsamen in den schnellen Bereich.

Auf der waagerechten Achse ist die Zeit aufgetragen, mit einigen definierten Zeitpunkten tᵢ, die im Folgenden einzeln erläutert werden. Die senkrechte Achse stellt einen relativen Drehzahlwert dar.

Die gestrichelte Linie 14 zeigt die Stellung der Schaltanordnung zum jeweiligen Zeitpunkt. Die Stellung der Schaltanordnung kann zwischen einer Endstellung für den schnellen Bereich S, einer Neutralstellung N und einer Endstellung für den langsamen Bereich L wechseln.

Zum Zeitpunkt t0 wird die Bereichsgruppe im schnellen Bereich betrieben und die Schaltanordnung steht in der Endstellung S. Die Getriebeeingangswelle dreht mit der verhältnismäßig niedrigen Drehzahl n_{S}. Zum Zeitpunkt t1 wird die Schaltanordnung der Bereichsgruppe in die Neutralstellung geschaltet und mit Hilfe des Antriebsmotors wird die Getriebeeingangswelle in Richtung Zieldrehzahl n_{L} für den langsamen Bereich beschleunigt. Das dargestellte Beispiel zeigt einen etwa linearen Drehzahlanstieg zwischen den Zeitpunkten t1 und t2. Kurz vor dem Erreichen der Zieldrehzahl n_{L} wird die Steigung des Drehzahlanstieges geringer, um die Zieldrehzahl mit der erforderlichen Genauigkeit zu erreichen. Der Drehzahlanstieg der Getriebeeingangswelle zwischen den Punkten t1 und t2 kann auch einen anderen Verlauf und eine andere Steigung aufweisen, abhängig von der Drehmomentkurve des Antriebsmotors und von möglichen Kupplungsbetätigungen und Schaltabläufen in der Splitgruppe und in der Hauptgruppe des Mehrgruppengetriebes. Der Verlauf des Drehzahlanstieges wird vorteilhaft durch Steuerungseingriffe in die Motorsteuerung beeinflusst und durch Drehzahlsensoren überwacht.

Der Drehzahlanstieg der Getriebeeingangswelle kann bei einer als Planetengetriebe ausgeführten Bereichsgruppe auch zu einem Drehzahlrückgang an einem der zu verbindenden Getriebeelemente auf die Drehzahl Null führen. Dies ist beispielsweise dann der Fall, wenn die Kupplungsverzahnung des langsamen Bereiches gehäusefest angeordnet ist, weil beim Betrieb im langsamen Bereich ein Getriebeelement des Planetengetriebes, z.B. das Hohlrad, über die Schiebemuffe gehäusefest gehalten wird. In dieser Ausführung führt die Zieldrehzahl n_{L} der Getriebeeingangswelle bei Bereichsschaltungen in Richtung langsamer Bereich zum Stillstand der zu verbindenden Getriebeelemente Schiebemuffe und Kupplungskörper.

Sobald zum Zeitpunkt t2 der Gleichlauf bzw. der Stillstand der in der Bereichsgruppe zu verbindenden Getriebeelemente erreicht ist, wird die Schaltanordnung von der Neutralstellung N in die Endstellung für den langsamen Bereich L geschaltet. Dabei wird die Schiebemuffe aus einer mittleren Neutralstellung in die entsprechende Endstellung L verschoben, sodass die Schaltverzahnung 20 der Schiebemuffe mit der Kupplungsverzahnung 23 des langsamen Bereiches in Eingriff kommt.

Die antriebsseitige Drehzahl der Bereichsgruppe wird mit Hilfe des Antriebsmotors bis zum Zeitpunkt t2 genau auf die Zieldrehzahl beschleunigt, sodass das Schalten der Schaltanordnung der Bereichsgruppe in den langsamen Bereich ohne mechanische Synchroneinrichtung störungsfrei durchgeführt werden kann. Dies ist notwendig, weil die herkömmliche, mechanische Synchronisierung bei Rückwärtsfahrt in dieser Drehrichtung nicht wirksam ist.

Der Drehzahlverlauf der Getriebeeingangswelle bei Schaltungen in den schnellen Bereich ist im Diagramm in Fig. 1 ab dem Zeitpunkt t3 dargestellt.

Obwohl die mechanische Synchronisierung bei Bereichsschaltung in Richtung des schnellen Bereiches bei Rückwärtsfahrt nicht wirksam ist, ist ein bestimmter Schaltweg, der für die mechanische Synchronisierung bei Vorwärtsfahrt notwendig ist, auch bei Rückwärtsfahrtschaltungen vorhanden. Dieser Schaltweg wird bei Rückwärtsfahrtschaltungen in Richtung schneller Bereich als Neutralstellungsbereich genutzt. Auf diese Weise wird trotz der, für den beschriebenen Schaltablauf bei Rückwärtsfahrt notwendigen Neutralstellung nicht mehr Bauraum benötigt als bei einer herkömmlichen synchronisierten Schaltanordnung, die nur für Vorwärtsfahrtschaltungen störungsfrei verwendbar ist.

Vom Zeitpunkt t2 bis zum Zeitpunkt t3 wird die Bereichsgruppe im langsamen Bereich betrieben. Zum Zeitpunkt t3 wird die Schaltanordnung der Bereichsgruppe in die Neutralstellung N geschaltet und die Drehzahl der antriebsseitigen Drehmassen werden beispielsweise mit einer Getriebebremse im Hauptgetriebe abgebremst. Weil eine hinreichend genaue Drehzahlführung der antriebsseitigen Drehmassen auf die Zieldrehzahl n_{S} mittels einer Getriebebremse allein nicht möglich ist, und weil die mechanische Synchronisierung bei Rückwärtsfahrt in dieser Drehrichtung nicht wirksam ist, werden die antriebsseitigen Drehmassen beim Schalten in den schnellen Bereich bis unterhalb der Zieldrehzahl n_{S} abgebremst, um danach mit Hilfe der mechanischen Synchronisierung genau auf die Zieldrehzahl n_{S} beschleunigt zu werden. Durch das Abbremsen der antriebsseitigen Drehmassen bis unterhalb der Zieldrehzahl n_{S} wird die Drehrichtung zwischen der Schiebemuffe mit Synchronring und dem Kupplungskörper umgedreht, so dass die mechanische Synchronisierung trotz Rückwärtsfahrt wirksam ist und die Drehzahlen der zu verbindenden Getriebeelemente durch die mechanische Synchronisierung aneinander angeglichen werden.

Im Diagramm markiert t4 den Zeitpunkt, zu dem die Drehzahl der Getriebeeingangswelle unterhalb der Zieldrehzahl n_{S} sinkt. Zu diesem Zeitpunkt wird die Drehrichtung zwischen der Schiebemuffe mit Synchronring und dem Kupplungskörper umgedreht. Kurz nach dem Zeitpunkt t4 wird die Getriebebremse ausgeschaltet und die mechanische Synchronisierung beginnt beschleunigend auf die antriebsseitigen Drehmassen zu wirken, so dass sich der Drehzahlrückgang zum Zeitpunkt t5 umkehrt in einen Drehzahlanstieg in Richtung Zieldrehzahl n_{S}. Diese Zieldrehzahl n_{S} wird mit Hilfe der mechanischen Synchronisierung zum Zeitpunkt t6 erreicht.

Zum Zeitpunkt t6 wird die Schaltanordnung von der Neutralstellung in die Endstellung S des schnellen Bereiches geschaltet. Dabei wird die Schiebemuffe aus einer mittleren Neutralstellung in die entsprechende Endstellung S verschoben, sodass die Schaltverzahnung der Schiebemuffe mit der Kupplungsverzahnung des langsamen Bereiches in Eingriff kommt.

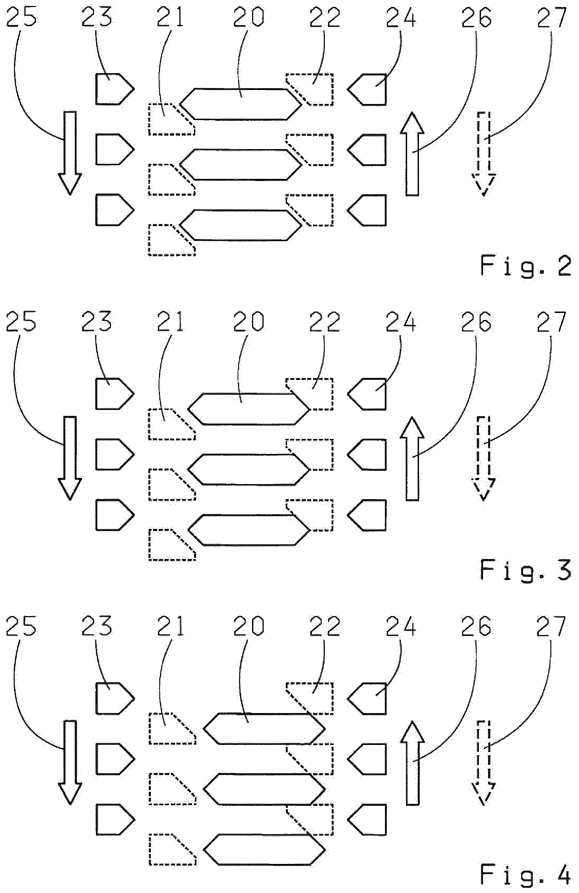

Die Fig. 2 bis 5 zeigen eine teilweise Abwicklung eines Zylinderschnitts einer erfindungsgemäßen Schaltanordnung im Bereich der Schaltverzahnung 20 der Schiebemuffe, der Sperrverzahnungen 21, 22 der Synchronringe und der Kupplungsverzahnungen 23, 24 der Kupplungskörper. Die Pfeile 25 und 26 zeigen jeweils die relative Drehrichtung der Kupplungsverzahnungen 23 und 24 im Bezug auf die Schaltverzahnung 20 der Schiebemuffe bei Rückwärtsfahrt an.

In Fig. 2 steht die Schaltanordnung in einer mittigen Neutralstellung. In dieser Stellung findet keine Drehmomentübertragung über die Bereichsgruppe statt. Die Synchronringe mit Sperrverzahnung 21, 22 rotieren gemeinsam mit der Schiebemuffe. Die Synchronringe sind in Umfangsrichtung um einen bestimmten Winkel zur Schiebemuffe verdrehbar, sodass die Sperrverzahnung 21, 22 der Synchronringe den Schaltweg für die Schaltverzahnung 20 der Schiebemuffe in die jeweilige Schaltrichtung freigeben können. Dies geschieht, wenn die schrägen Stirnflächen der Schaltverzahnung 20 durch die axial wirkende Betätigungskraft gegen die einseitig abgeschrägten Stirnflächen der Sperrverzahnung 21, 22 gedrückt werden, aneinander abgleiten und der Synchronring in die entsprechende Richtung verdreht wird, bis die Durchschaltstellung erreicht ist.

Bei Rückwärtsfahrt rotiert die dem langsamen Bereich zugeordnete Kupplungsverzahnung 23 im Bezug zur Schaltverzahnung 20 in der Drehrichtung 25. Die dem schnellen Bereich zugeordnete Kupplungsverzahnung 24 rotiert im Bezug zur Schaltverzahnung 20 bei Rückwärtsfahrt in die Drehrichtung 26. Eine Betätigung der Schiebemuffe aus dieser Neutralstellung in eine der beiden Richtungen bewirkt, dass der jeweilige Synchronring mit Sperrverzahnung 23, 24 durch das Reibmoment an den Reibflächen in die Durchschaltstellung verdreht wird, ohne dass eine für die Synchronisierung notwendige Sperrwirkung eintritt. Aus diesem Grund ist diese mechanische Synchronisierung bei Rückwärtsfahrt nicht wirksam.

In Fig. 3 ist eine Betätigung der Schiebemuffe in Richtung der Kupplungsverzahnung 24 des schnellen Bereiches am Synchronpunkt dargestellt, wobei der Synchronpunkt bei der Schaltbewegung der Schiebemuffe in Richtung des schnellen Bereiches erreicht ist, wenn die Schaltverzahnung 20 der Schiebemuffe mit ihrer stirnseitigen Schrägfläche auf eine entsprechende Schrägflache an der Sperrverzahnung 22 des Synchronringes trifft, der dem schnellen Bereich zugeordnet ist. Der Synchronring mit der Sperrverzahnung 22 wird mit einer nicht dargestellten Reibfläche auf eine Reibfläche des entsprechenden Kupplungskörpers gedrückt. Die relative Drehrichtung des Kupplungskörpers mit der Kupplungsverzahnung 24 bewirkt nun, dass der Synchronring mit der Sperrverzahnung 22 in die Durchschaltstellung verdreht wird, ohne dass eine für die Synchronisierung notwendige Sperrwirkung eintritt. Deshalb muss die Drehrichtung zwischen der Schiebemuffe und dem Kupplungskörper bei Schaltungen bei Rückwärtsfahrt in Richtung schneller Bereich zunächst umgekehrt werden, indem die Drehzahl der Getriebeeingangswelle mittels einer Getriebebremse bis unterhalb der Zieldrehzahl abgebremst wird. Dadurch kehrt sich die Drehrichtung 26 der Kupplungsverzahnung 24 aus der Sicht mit Schaltverzahnung 20 um in die Drehrichtung 27.

Wird nun die Schiebemuffe mit der Schaltverzahnung 20 in Richtung schneller Bereich betätigt, so bewirkt das über die Reibflächen des Synchronringes und des in Drehrichtung 27 rotierenden Kupplungskörpers erzeugte Reibmoment, dass die Sperrverzahnung 22 mit dem Synchronring in der Sperrstellung gehalten wird, bis die Drehzahldifferenz zwischen Synchronring und Kupplungskörper ausgeglichen ist und das Reibmoment gegen Null geht. Erst dann wird der Synchronring durch die Betätigungskraft an der Schiebemuffe über die stirnseitigen Schrägflächen der Schaltverzahnung 20 und der Sperrverzahnung 22 in die Durchschaltstellung verdreht. Die Durchschaltstellung ist in Fig. 4 dargestellt.

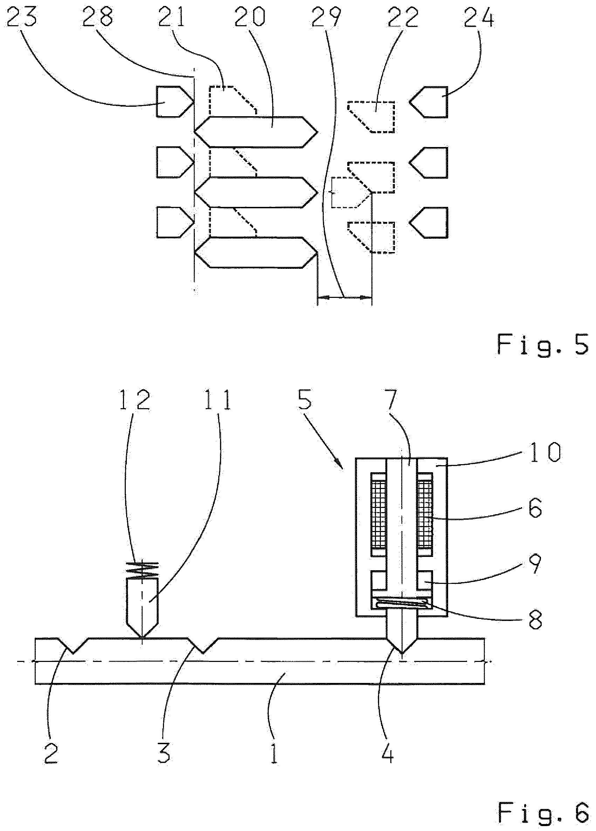

Die Drehzahlangleichung bei Bereichsschaltungen bei Rückwärtsfahrt in den langsamen Bereich erfolgt vollständig durch eine präzise Drehzahlführung der Getriebeeingangswelle mit Hilfe der Führung der Motordrehzahl. Die mechanische Synchronisierung wird dazu nicht benutzt. Deshalb kann ein Teil des Schaltweges in Richtung langsamer Bereich als Neutralstellungsbereich 29 genutzt werden, wie oben beschrieben. Der Neutralstellungsbereich 29 ist in Fig. 5 dargestellt. Er erstreckt sich in axialer Richtung von einem durch die Linie 28 markierten Ausschaltpunkt bis zum Synchronpunkt auf der Seite des schnellen Bereichs. Der Ausschaltpunkt ist durch die Linie 28 gekennzeichnet und liegt dort, wo die einander zugewandten Enden der Schaltverzahnung 20 der Schiebemuffe und der Kupplungsverzahnung 23 des dem langsamen Bereich zugeordneten Kupplungskörpers bei radialer Blickrichtung auf der Linie 28 liegen.

Der Synchronpunkt ist bei der Schaltbewegung der Schiebemuffe in Richtung des schnellen Bereiches dann erreicht, wenn die Schaltverzahnung 20 der Schiebemuffe auf die Sperrverzahnung 22 des Synchronringes trifft, der dem schnellen Bereich zugeordnet ist.

In der Fig. 6 ist ein Ausschnitt einer Schaltanordnung mit einer Neutralstellungsrastierung 5 dargestellt, die zur Durchführung des beschriebenen Verfahrens geeignet ist. Die dargestellte Schaltanordnung kann in einer Neutralstellung rastiert werden und wird selbstständig in zwei Endstellungen rastiert. Dazu ist eine Schaltschiene 1 mit drei Vertiefungen 2, 3 und 4 versehen, die die jeweiligen Raststellungen vorgeben. Fig. 6 zeigt die Schaltanordnung in der Neutralstellung und mit eingeschalteter und eingerückter Neutralstellungsrastierung 5. Die Schaltschiene 1 wird von der Neutralstellungsrastierung 5 in einer mittleren Stellung, der Neutralstellung gehalten. Die Neutralstellung der Schaltschiene 1 entspricht auch der Neutralstellung einer nicht dargestellten Schiebemuffe der Schaltanordnung.

Die Neutralstellung ist durch eine Vertiefung 4 in der Schaltschiene 1 in Verbindung mit einem in diese Vertiefung 4 formschlüssig eingreifenden Rastelement 7 rastierbar. Mögliche toleranzbedingte Abweichungen der Neutralstellung liegen innerhalb des Neutralstellungsbereiches 29. Das Rastelement 7 ist Teil der Neutralstellungsrastierung 5. Die Neutralstellungsrastierung 5 besteht im Wesentlichen aus einem Gehäuse 10, aus einem elektromagnetischen Aktuator 6, aus dem Rastelement 7 mit einem Mitnehmerbund 9 und aus einer Rückhaltefeder 8.

Die Neutralstellungsrastierung 5 ist über nicht dargestellte signalübertragende Steuerleitungen mit einer ebenfalls nicht dargestellten elektronischen Getriebesteuerung verbunden und kann so durch den elektromagnetischen Aktuator 6 betätigt bzw. ein- und ausgeschaltet werden. Im eingeschalteten Zustand drückt der Aktuator 6 das Rastelement 7 mit dessen unterem Ende entgegen der Kraft der Rückhaltefeder 8 in die Vertiefung 4 der Schaltschiene 1 und rastiert so die gesamte Schaltanordnung in der Neutralstellung. Diese Art der Betätigung ermöglicht es die Neutralstellungsrastierung während der Vorwärtsfahrt ausgeschaltet zu lassen. Da die Neutralstellungsrastierung nur bei Bereichsschaltungen während der Rückwärtsfahrt erforderlich ist, können Bereichsschaltungen bei Vorwärtsfahrt unbeeinflusst von der Neutralstellungsrastierung erfolgen. So können die Schaltkräfte und Verschleiß bei Bereichsschaltungen während der Vorwärtsfahrt gering gehalten werden, weil dabei keine Rastierkräfte überwunden werden müssen.

Die Endstellungen der Schaltanordnung entsprechen dem jeweils eingelegten langsamen bzw. schnellen Bereich. Sie werden rastiert, indem ein federbelastetes Rastelement 11 formschlüssig in eine der jeweiligen Endstellung zugeordnete Vertiefung 2 bzw. 3 in der Schaltschiene 1 eingreift. Im Gegensatz zu der Neutralstellungsrastierung 5 drückt das durch die Rastierfeder 12 federbelastete Rastelement 11 für die Rastierung der Endstellungen dauernd auf die Schaltschiene 1. Die Rastierfeder 12 stützt sich gegenüber dem Rastelement 11 an einem ortsfesten Bauteil des Getriebegehäuses ab.

### Bezugszeichen

- 1: Schaltschiene
- 2: Vertiefung
- 3: Vertiefung
- 4: Vertiefung
- 5: Neutralstellungsrastierung
- 6: Aktuator
- 7: Rastelement
- 8: Rückhaltefeder
- 9: Mitnahmebund
- 10: Gehäuse
- 11: Rastelement
- 12: Rastierfeder
- 13: Drehzahllinie
- 14: Schaltstellung
- 20: Schaltverzahnung
- 21: Sperrverzahnung
- 22: Sperrverzahnung
- 23: Kupplungsverzahnung
- 24: Kupplungsverzahnung
- 25: Drehrichtungspfeil
- 26: Drehrichtungspfeil
- 27: Drehrichtungspfeil
- 28: Linie
- 29: Neutralstellungsbereich

- S: Endstellung schneller Bereich
- N: Neutralstellung
- L: Endstellung langsamer Bereich
- n: Drehzahl
- n_{L}: Zieldrehzahl langsamer Bereich
- n_{S}: Zieldrehzahl schneller Bereich
- t: Zeit
- t1 - t6: Zeitpunkte im Schaltverlauf

## Patentansprüche

1. Schaltanordnung zum Schalten einer Bereichsgruppe eines Mehrgruppengetriebes mit einem langsamen und einem schnellen Bereich, wobei die Schaltanordnung eine axial verschiebbare Schiebemuffe mit beidseitig angeordneten Synchronringen mit Sperrverzahnung (21, 22) aufweist, wobei die Schaltanordnung eine Neutralstellungsrastierung (5) aufweist, mit der die Schaltanordnung in einem Neutralstellungsbereich (29) rastierbar ist, der sich in axialer Richtung erstreckt, so dass im rastierten Zustand die Schaltanordnung nicht auf eine feste Neutralstellung festgelegt wird, sondern einen bestimmten Bereich als Neutralstellungsbereich offen gelassen wird, **dadurch gekenn zeichnet**,
dass sich der Neutralstellungsbereich (29) von einem Ausschaltpunkt des langsamen Bereiches bis zu einem Synchronpunkt des schnellen Bereiches erstreckt, wobei der Ausschaltpunkt dort liegt, wo die einander zugewandten Enden einer Schaltverzahnung (20) der Schiebemuffe und einer Kupplungsverzahnung (23) eines dem langsamen Bereich zugeordneten Kupplungskörpers bei radialer Blickrichtung auf einer Linie liegen, und wobei der Synchronpunkt dort liegt, wo die Schaltverzahnung (20) der Schiebemuffe bei der Schaltbewegung der Schiebemuffe in Richtung des schnellen Bereiches auf die Sperrverzahnung (22) des dem schnellen Bereich zugeordneten Synchronringes trifft.

2. Schaltanordnung nach Anspruch 1, **dadurch gekennzeichnet, dass** die Schaltanordnung automatisiert betätigbar ist, und dass Betätigungsaktuatoren der Schaltanordnung von einer elektronischen Steuereinrichtung in Abhängigkeit von erfassten und der Steuereinrichtung zugeführten Drehzahlwerten an antriebsseitigen und abtriebsseitigen Getriebeelementen ansteuerbar sind.

3. Schaltanordnung nach Anspruch 1 oder 2, **dadurch gekennzeichnet, dass** die Neutralstellungsrastierung (5) gesteuert ein- und ausschaltbar ist.

4. Schaltanordnung nach Anspruch 3, **dadurch gekennzeichnet, dass** die Neutralstellungsrastierung (5) von einer elektronischen Steuereinrichtung in Abhängigkeit von erfassten und der Steuereinrichtung zugeführten Drehzahlwerten an den antriebsseitigen und den abtriebsseitigen Getriebeelementen ein- und ausschaltbar ist.

5. Schaltanordnung nach einem der Ansprüche 1 bis 4, **dadurch gekennzeichnet, dass** die Neutralstellungsrastierung (5) ein Rastelement (7) aufweist, welches zum Zwecke der Rastierung formschlüssig in eine Vertiefung (4) einer zur Schaltanordnung gehörenden Schaltschiene (1) eingreift.

6. Mehrgruppengetriebe mit einer Splitgruppe, einer Hauptgruppe und einer Bereichsgruppe, **dadurch gekennzeichnet, dass** die Bereichsgruppe eine Schaltanordnung gemäß einem der Patentansprüche 1 bis 5 aufweist.

## Claims

1. Shifting arrangement for shifting a range group of a multi-group transmission with a slow range and a fast range, wherein the shifting arrangement has an axially displaceable sliding sleeve with synchronizer rings arranged on both sides with a locking toothing arrangement (21, 22), wherein the shifting arrangement has a neutral position latching system (5) with which the shifting arrangement can be latched in a neutral position range (29) which extends in the axial direction, with the result that in the latched state the shifting arrangement is not secured at a fixed neutral position, instead a specific range is left open as a neutral position range,
**characterized**
**in that** the neutral position range (29) extends from a switch-off point of the slow range up to a synchronizing point of the fast range, wherein the switch-off point is located where the ends, facing one another, of a shifting toothing arrangement (20) of the sliding sleeve and a clutch toothing arrangement (23) of a clutch body, assigned to the slow range, lie on a line in a radial viewing direction, and wherein the synchronizing point is located where the shifting toothing arrangement (20) of the sliding sleeve strikes against the locking toothing arrangement (22) of the synchronizing ring assigned to the fast range, during the shifting movement of the sliding sleeve in the direction of the fast region.

2. Shifting arrangement according to Claim 1, **characterized in that** the shifting arrangement can be activated in an automated fashion, and **in that** activation actuators of the shifting arrangement can be actuated by an electronic control apparatus as a function of detected rotational speed values, which are fed to the control apparatus, at drive-side and output-side transmission elements.

3. Shifting arrangement according to Claim 1 or 2, **characterized in that** the neutral position latching system (5) can be switched on and off in a controlled fashion.

4. Shifting arrangement according to Claim 3, **characterized in that** the neutral position latching system (5) can be switched on and off by an electronic control apparatus as a function of detected rotational speed values, which are fed to the control apparatus, at the drive-side and the output-side transmission elements.

5. Shifting arrangement according to one of Claims 1 to 4, **characterized in that** the neutral position latching system (5) has a latching element (7) which, for the purpose of latching, engages in a positively locking fashion in a depression (4) in a shifting rail (1) which is associated with the shifting arrangement.

6. Multi-group transmission having a split group, a main group and a range group, **characterized in that** the range group has a shifting arrangement according to one of Patent Claims 1 to 5.

## Revendications

1. Agencement de commutation pour la commutation d'un groupe-relais d'une transmission à groupes multiples comprenant une zone lente et une zone rapide, l'agencement de commutation présentant un manchon de commande déplaçable axialement avec des bagues de synchronisation disposées des deux côtés avec une denture de blocage (21, 22), l'agencement de commutation présentant un encliquetage de position neutre (5) avec lequel l'agencement de commutation peut être enclenché dans une zone de position neutre (29) qui s'étend dans la direction axiale, de telle sorte que dans l'état enclenché, l'agencement de commutation ne soit pas fixé à une position neutre fixe mais qu'une zone déterminée soit laissée ouverte en tant que zone de position neutre,
**caractérisé en ce que** la zone de position neutre (29) s'étend depuis un point de désenclenchement de la zone lente jusqu'à un point de synchronisation de la zone rapide, le point de désenclenchement étant situé là où sont situées les extrémités tournées l'une vers l'autre d'une denture de commutation (20) du manchon de commande et d'une denture d'accouplement (23) d'un corps d'accouplement associé à la zone lente, dans une vue d'observation radiale en alignement, et le point de synchronisation étant situé là où la denture de commutation (20) du manchon de commande, lors du mouvement de commutation du manchon de commande dans la direction de la zone rapide, parvient sur la denture de blocage (22) de la bague de synchronisation associée à la zone rapide.

2. Agencement de commutation selon la revendication 1, **caractérisé en ce que** l'agencement de commutation peut être actionné de manière automatisée et **en ce que** des actionneurs de commande de l'agencement de commutation peuvent être commandés par un dispositif de commande électronique en fonction de valeurs de vitesse de rotation d'éléments de transmission du côté de l'entraînement et du côté de la prise de force, détectées et envoyées au dispositif de commande.

3. Agencement de commutation selon la revendication 1 ou 2, **caractérisé en ce que** l'encliquetage de position neutre (5) peut être commandé de manière à être enclenché et désenclenché.

4. Agencement de commutation selon la revendication 3, **caractérisé en ce que** l'encliquetage de position neutre (5) peut être enclenché et désenclenché par un dispositif de commande électronique en fonction de valeurs de vitesse de rotation d'éléments de transmission du côté de l'entraînement et du côté de la prise de force, détectées et envoyées au dispositif de commande.

5. Agencement de commutation selon l'une quelconque des revendications 1 à 4, **caractérisé en ce que** l'encliquetage de position neutre (5) présente un élément d'encliquetage (7) qui s'engage dans le but de l'encliquetage par engagement par correspondance de formes dans un renfoncement (4) d'un rail de commutation (1) appartenant à l'agencement de commutation.

6. Transmission à groupes multiples comprenant un doubleur de gamme, un groupe principal et un groupe relais, **caractérisée en ce que** le groupe relais présente un agencement de commutation selon l'une quelconque des revendications 1 à 5.
